(19) **Europäisches Patentamt European Patent Office Office européen des brevets**

(11) **EP 2 924 524 B1**

(12) **FASCICULE DE BREVET EUROPEEN**

(45) Date de publication et mention de la délivrance du brevet:
**21.11.2018 Bulletin 2018/47**

(51) Int Cl.:
***G05B 15/02*** *(2006.01)*     ***G05B 19/042*** *(2006.01)*

(21) Numéro de dépôt: **15160571.4**

(22) Date de dépôt: **24.03.2015**

(54) **PROCEDE DE CONTROLE ET DE COMMANDE D'UNE PLURALITE D'EQUIPEMENTS HETEROGENES**

KONTROLL- UND STEUERVERFAHREN EINER VIELZAHL VON HETEROGENEN GERÄTEN

METHOD FOR MONITORING AND CONTROLLING A PLURALITY OF HETEROGENEOUS DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2014 FR 1452594**

(43) Date de publication de la demande:
**30.09.2015 Bulletin 2015/40**

(73) Titulaire: **Progiris**
**92500 Rueil Malmaison (FR)**

(72) Inventeurs:
- **Calenda, Louis**
  **78200 Buchelay (FR)**
- **Ljutovac, Branko**
  **94360 Bry-sur-Marne (FR)**

(74) Mandataire: **Brevalex**
**95, rue d'Amsterdam**
**75378 Paris Cedex 8 (FR)**

(56) Documents cités:
**EP-A1- 1 046 972**     **EP-A1- 1 193 578**
**WO-A1-2009/140995**

## Description

### DOMAINE TECHNIQUE

L'invention concerne un procédé de contrôle et de commande d'une pluralité d'équipements hétérogènes d'une installation technique, chaque équipement étant apte à recevoir et/ou à délivrer au moins une information.

L'invention concerne également un dispositif destiné à mettre en oeuvre le procédé.

L'invention concerne aussi un programme d'ordinateur mémorisé sur un support d'enregistrement comportant des instructions pour réaliser les étapes du procédé lorsqu'il est exécuté par un ordinateur.

L'invention s'applique préférentiellement mais non exclusivement dans le domaine de la Gestion Technique du bâtiment (G.T.B) et de la Gestion Technique Centralisée (G.T.C).

### ÉTAT DE LA TECHNIQUE ANTÉRIEURE

Les systèmes de GTB/GTC connus ne couvrent généralement qu'une partie des domaines fonctionnels liés à la GTB/GTC. Ceci a favorisé l'émergence d'une multitude de fabricants, de produits, et donc de difficultés liées à la normalisation d'un protocole de communication unique entre ces différents équipements.

En effet, le fait que les systèmes GTB/GTC connus soient développés dans une stratégie purement orientée produit, dans un environnement complètement « propriétaire », difficilement adaptable aux évolutions technologiques, a pour conséquence de limiter le choix des clients en termes d'équipements et d'augmenter les coûts d'exploitation et de maintenance de ces équipements. Ces solutions reposent sur des matériels spécifiques pour chacun des domaines, et donc par déclinaison, sur des systèmes de câblages, des protocoles et des logiciels spécifiques qui ne sont pas interopérables. De plus, les protocoles utilisés ne sont pas hautement sécurisés ni redondants, ce qui peut à terme constituer un risque important pour les biens et les personnes. Par ailleurs, dans les systèmes intégrés de l'art antérieur, les seules solutions proposées pour assurer la communication des équipements entre eux reposent sur la mise en place de « passerelles » logicielles entres les applications et/ ou bases de données des différents fabricants. Ceci réduit notablement le niveau de maintenabilité et d'évolutivité de ces systèmes. En outre, la mise à jour des versions applicatives peut s'avérer impossible à cause des modifications éventuelles de bases de données et/ou fonctionnalités logicielles rendant ainsi les passerelles inopérantes. Par conséquent, les systèmes intégrés de l'art antérieur sont incapables de gérer le changement ou les demandes de nouvelles fonctionnalités du client. Dans la plupart des cas, les passerelles permettent de transférer des informations de reporting, mais rarement de fournir des passerelles « temps réel » pourtant les plus importantes pour l'exploitation au quotidien.

Le document WO 2009/140995 décrit un système et une méthode pour agréger et transmettre des métadonnées de chaine hétérogènes d'un processus de productions.

Le document EP 1 193 578 A1 décrit un système dans lequel des données représentant des informations représentant des événements sont échangées entres des appareils pour contrôler et commander une installation technique, lesdits événements étant générés par programmation orientée objet et comportent des fonctionnalités de traitement, de mesure et de stockage de données de mesures issues des appareils de l'installation technique et d'affichage d'alarme. Les données transmises sont intrinsèquement liées aux équipements sources et ne sont pas traduites en données abstraites susceptibles de subir un traitement générique.

Le document EP 1 046 972 578 A1 décrit un système de gestion des communications entre un programme « maître » et plusieurs équipements distincts « de terrains ». Ces communications transitent via un « proxy » chargé de gérer échanges entre le programme maître et chaque équipement de sorte que le programme « maître » n'ait pas à connaître ni l'adresse ni la localisation physique de chaque équipement.

Le but de l'invention est de pallier les inconvénients de l'art antérieur décrits ci-dessus au moyens d'une solution qui s'applique à l'ensemble des domaines fonctionnels précédemment cités, utilisant des moyens de communication standards, éprouvés, performants et sécurisés.

### EXPOSÉ DE L'INVENTION

Ce but est atteint au moyen d'un procédé de contrôle et de commande d'une pluralité d'équipements hétérogènes aptes à recevoir et/ou à délivrer au moins une information. Ce procédé comporte les étapes suivantes:

- traduire, par une unité centrale qui supervise les opérations et les interactions des différents équipements, chaque information en une classe d'objets abstraits indépendants des caractéristiques physiques desdits équipement, ladite classe étant définie en fonction de propriétés intrinsèques préalablement mémorisés dans une base de connaissance d'abstraction,

  - associer chaque classe d'objets abstraits à une catégorie de données interprétables automatiquement,
  - appliquer à chaque catégorie de données, par ladite unité centrale, au moins un traitement spécifique parmi une pluralité de traitements prédéfinis de manière à superviser de façon centralisée les opérations et les interactions des différents équipements.

Dans une première variante de l'invention, la traduction de chaque information en classe d'objets abstraits est effectuée par un module d'abstraction et de catégorisation intégré à chaque équipement.

Dans une deuxième variante de l'invention, la traduction de chaque information en classe d'objets abstraits est effectuée par une unité centrale de traitement qui supervise les opérations et les interactions des différents équipements.

Dans chacune des variantes de l'invention, la traduction de chaque information en classe d'objets abstraits consiste à classer chaque information soit en tant que grandeur physique binaire susceptible de prendre deux états distincts, soit en tant que grandeur physique variable susceptible de prendre plusieurs valeurs distinctes dans un intervalle continu de valeurs, soit en tant que grandeur physique présentant une forme de trames formatées.

Selon l'invention, l'association de chaque classe d'objets abstraits à une catégorie consiste à définir les paramètres de comportement l'information de chaque classe en fonction des valeurs extrêmes mesurables ($EM_{min}$, $EM_{max}$) de la grandeur représentée par cette information, des valeurs prises en compte pour le calcul de ($EC_{min}$, $EC_{max}$), de la précision de mesure de ladite grandeur, du Pas associé à chaque changement de valeur de ladite grandeur, de la formule de conversion d'une valeur mesurée de ladite grandeur en une valeur utilisable par une unité de traitement. La définition des propriétés intrinsèques de ladite grandeur physique est réalisée en fonction de sa valeur actuelle $EM_n$ mesurée à un instant n, de sa valeur précédente $EM_{n-1}$, mesurée à un instant n-1, de sa valeur actuelle $EC_n$ convertie à un instant n, de sa valeur précédente $EC_{n-1}$ convertie à un instant n-1, du code temps actuel mesuré $T_n$, et du code temps précédent $T_{n-1}$. Les propriétés intrinsèques et les paramètres de comportement de chaque information sont interprétés à l'aide d'une base prédéfinie de connaissance et d'interprétation.

Le procédé selon l'invention est mis en oeuvre au moyen d'un dispositif de contrôle et de commande d'une pluralité d'équipements hétérogènes d'une installation technique comportant:

- un module d'abstraction et de catégorisation destiné à définir, pour chaque information, une classe d'objets abstraits indépendants de la nature de ladite information et des caractéristiques physiques desdits équipements,
- un module de catégorisation destiné à associer ladite information une catégorie prédéfinie de manière à obtenir, pour chaque information, une classe d'objet catégorisée définissant des données interprétables automatiquement.

Le module d'abstraction et de catégorisation selon l'invention comporte une unité de traduction destinée à définir, pour chaque information, une classe d'objets abstraits indépendants de la nature de ladite information et des caractéristiques physiques desdits équipements.

Le module de catégorisation selon l'invention comporte une unité d'interprétation destinée à associer ladite information à une catégorie prédéfinie de manière à obtenir, pour chaque information, une classe d'objet catégorisée définissant des données interprétables automatiquement.

## BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:

- la figure 1, représente schématiquement un dispositif de contrôle et de commande d'une pluralité d'équipements hétérogènes d'une installation technique selon l'invention,
- la figure 2 représente schématiquement un organigramme illustrant l'étape de catégorisation selon l'invention,
- la figure 3 représente schématiquement un organigramme illustrant l'étape d'analyse des propriétés et comportements d'une information selon l'invention,
- La figure 4 illustre schématiquement un exemple de modèle de fonction de transfert utilisé dans le procédé selon l'invention,
- La figure 5 illustre schématiquement un scénario complexe construit à partir du modèle de fonction de transfert de la figure 4.

## EXPOSÉ DÉTAILLÉ DE MODES DE RÉALISATION PARTICULIERS

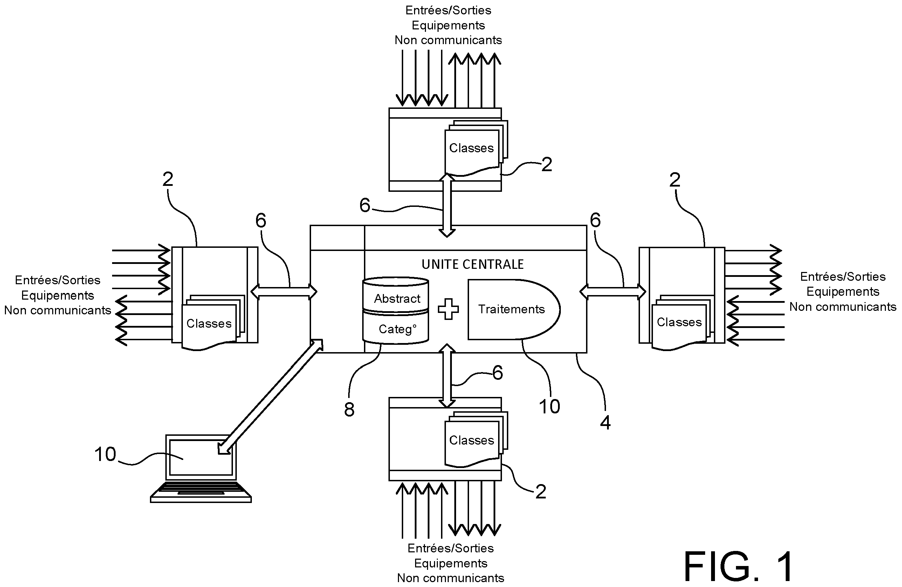

La figure 1 représente un dispositif de contrôle et de commande d'une pluralité d'équipements hétérogènes comportant plusieurs modules d'abstraction et de catégorisation 2 répartis par domaine fonctionnels. Chaque module d'abstraction et de catégorisation 2 comporte un logiciel de pilotage embarqué et communique, d'une part, avec une unité centrale de traitement 4 via une liaison Ethernet 6, et d'autre part, avec un ou plusieurs équipements hétérogènes non représentés. L'unité centrale de traitement 4 comporte une base de données 8 et une unité de calcul 10 et communique avec une ou plusieurs interfaces d'administration et/ou d'exploitation 12. Les modules d'abstraction et de catégorisation 2 peuvent interagir entre eux via la liaison Ethernet IP 6, en utilisant un protocole type DPWS (DEVICE Protocol for Web Services). Enfin, un service de traitement peut également interagir avec tout équipement électronique et/ou informatique tiers connecté au réseau IP.

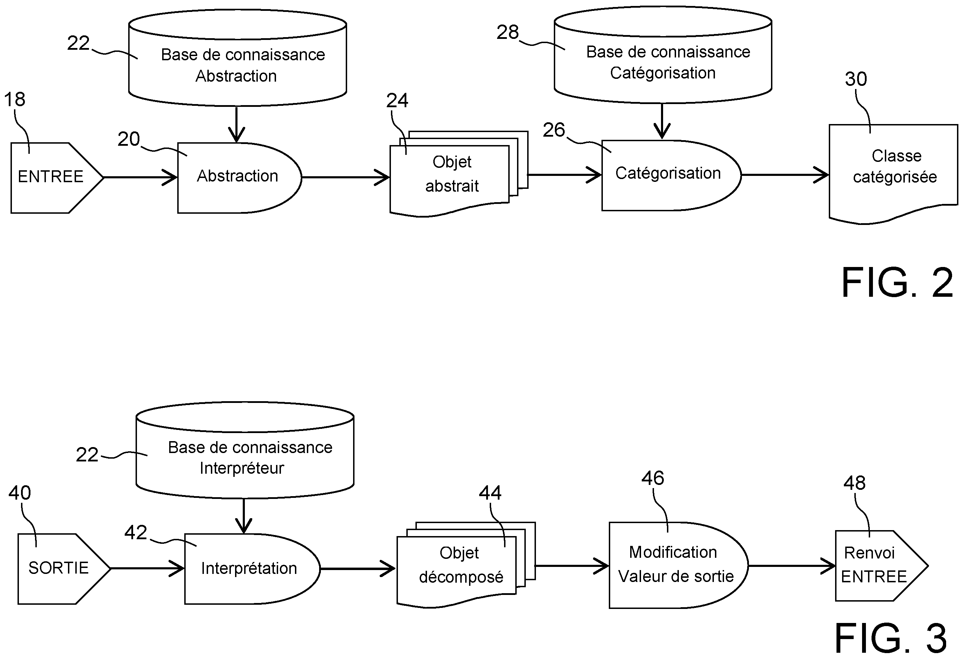

La figure 2 illustre schématiquement l'étape de catégorisation de chaque information d'entrée 18 représentant une grandeur physique transmise par un équipement à l'unité centrale de traitement 4 via un module d'abstraction et de catégorisation 2. Chaque information d'entrée 18 est d'abord interprétée par l'unité centrale de traitement 4 pour en déterminer le type et le comportement afin de définir, pour cette information, une classe abstraite indépendants des caractéristiques physiques de l'équipement.

Notons que la mise en oeuvre des interactions entre les entrée et les sorties, indépendamment des compatibilités entre matériels, est rendus possible grâce à la définition de fonctions de transfert et de diagramme de flux (scénario) composé d'entrées, de sorties, ainsi que de « fonctions » logiques.

L'étape 20 consiste à transformer l'information d'entrée 18 en une grandeur abstraite à l'aide de modèles prédéfinis enregistrés dans une base de connaissance 22. A l'étape 26, la grandeur abstraite 24 obtenue est associée, à l'aide de modèles prédéfinis dans une base de catégorisation 28, à une catégorie de données interprétables automatiquement. A la fin de ce processus, l'unité centrale de traitement 4 délivre une information classée et catégorisée 30, indépendantes des caractéristiques physiques de l'équipement.

Le procédé selon l'invention s'appuie sur la classification suivante des données numériques:

- Grandeurs physiques binaires: qui peuvent prendre comme valeur, uniquement « 0 » ou « 1 » pour déterminer leur état. On parle souvent de grandeurs « à 2 états »,
- Grandeurs physiques variables: qui peuvent prendre toutes les valeurs possibles entre deux bornes finis que l'on appelle les extrêmes,
- Grandeurs physiques de type trame: qui ne peuvent être interprétées ni comme une valeur binaire, ni comme une valeur analogique, mais comme une trame d'information à part entière. Il peut par exemple s'agir d'une chaine de caractères contenant une information formatée. Ce type fait l'objet d'une catégorisation particulière pour transformer l'information trame, en l'un ou l'autre des types précédents.

**Spécificité de type 'TRAME'**

Le type trame est un type différent en ce sens que:

- Il s'agit d'une chaine de caractères ou tableau d'octets dont le format est interdépendant du format de donnée fourni par l'équipement terminal (ex : MODBUS),
- Il peut contenir plus d'une information, chacune de ces informations se trouvant à un offset donné dans la trame, et pour une taille d'information constante définie en multiple d'octet,

Néanmoins, comme pour les types précédents, et une fois l'information extraite de la trame, elle peut le plus souvent être interprétée comme une donnée binaire ou variable.

Par conséquent, abstraire une information contenue dans une trame, revient à définir une classe d'extraction (enfant de la classe d'abstraction) avec pour propriétés l'offset en octet de l'information, la taille en octet de l'information, et le type de conversion numérique de l'information (binaire, entier, réel, etc..).

Cette classe d'extraction fait donc partie intégrante de la classe d'abstraction, sous la propriété de celle-ci appelée « composition de trame » dans cette description.

Lors de la mise en place des modules matériels, un administrateur effectue le paramétrage des différentes entrées/sorties en fonction des raccordements opérés, en donnant simplement une information qui définit leurs propriétés et comportements. Le système implémente alors le comportement associé en fonction de ces propriétés.

**Définition des classes d'entrée**

L'unité centrale de traitement 4 définit, Pour chacune des informations d'entrée reçues des équipements hétérogènes à contrôler, un modèle de classe qui permet de déterminer son comportement objectif et complet, la nature de la grandeur physique représentée par l'information. Cette opération est exécutée en prenant en considérations les propriétés de comportement de la grandeur et les propriétés intrinsèques de cette grandeur.

Préférentiellement, les propriétés de comportement de la grandeur sont analysées en considérant:

- le type de ladite grandeur,
- l'identifiant unique de la grandeur (UID),
- les extrêmes mesurables (EMmin, EMmax) pour cette grandeur,
- les extrêmes pris en compte pour le calcul (ECmin, ECmax),
- la décomposition de la trame le cas échéant,
- la précision de mesure de la grandeur,
- le pas associé à chaque changement de valeur, etc...,
- la formule de conversion de la valeur lue par le module d'abstraction et de catégorisation 2 dans la valeur de calcul (EC).

Les propriétés intrinsèques sont mise à jour en permanence par les modules d'abstraction et de catégorisation 2 et sont déterminées en prenant en considération:

- la valeur mesurée actuelle (EMn),
- la valeur mesurée N-1 (EMn-1),
- la valeur convertie actuelle (ECn),
- la valeur convertie N-1 (ECn-1),

- le «Time Code» mesure actuelle (Tn),
- le « Time Code » mesure N-1 (Tn-1).

Notons que la notion de «time code» représente une information temporelle précise, de l'ordre de la milliseconde, qui permettra de déterminer par exemple un intervalle de temps entre deux mesures de valeur N et N-1, qui pourra influer sur le calcul des fonctions de transfert.

On se retrouve donc dans un système dont l'information classifiée est fonction de trois paramètres importants, l'identifiant unique de l'information (UID), les valeurs calculées (entrée) ou applicables (sorties), la catégorisation de la grandeur physique.

$$OUT_c = f( UID, VALs, CATEGORIE)$$

Il apparait à travers l'équation précédente que les paramètres fondamentaux sont l'identifiant unique de l'entrée/sortie concernée, les valeurs mesurées ou à modifier, et la catégorie de la grandeur physique qui permettront d'appliquer des fonctions de transfert préétablies dans la base de connaissance 22.

Ainsi, la connaissance du domaine d'application n'a d'intérêt que pour déterminer les actions possibles au moment du paramétrage du système.

La figure 3 illustre schématiquement un processus de décomposition d'une information de sortie 40 afin d'en fixer la valeur.

Dans ce cas, l'information de sortie 40 est considérée comme une information d'entrée dont la valeur peut être fixée par programme. En effet, pour une information d'entrée, seule une lecture de sa valeur courante est permise. L'unité centrale de traitement 4 lui applique le processus de classification consistant en une abstraction et une catégorisation pour en déterminer les propriétés et le comportement. Par contre, l'unité centrale de traitement 4 applique l'opération quasi inverse à l'information de sortie 40 consistant à en fixer la valeur à partir des informations de comportement et propriétés qui lui sont associées.

A cet effet, à l'étape 42, les informations de comportement et les propriétés de la grandeur concernée sont interprétées à l'aide de la base de connaissance 22 pour fournir un objet décomposé 44. A l'étape 46, l'objet 44 est modifié par l'unité centrale de traitement 4 puis renvoyée en entrée (étape 48).

Ces fonctions de transferts permettent à partir d'au moins une information d'entrée catégorisée 30, d'effectuer au moins un traitement, et de déterminer une information de sortie 40 à appliquer.

La définition des fonctions de transferts s'organisent ainsi:

• création d'une base de connaissance des fonctions de transferts applicables,

• mise en place d'un diagramme de flux (scénario) composé d'entrées, de sorties, ainsi que de « fonctions » logiques.

En plus de ce traitement, d'autres éléments d'entrée peuvent influer sur la valeur de sortie. On parlera alors de pondérateur.

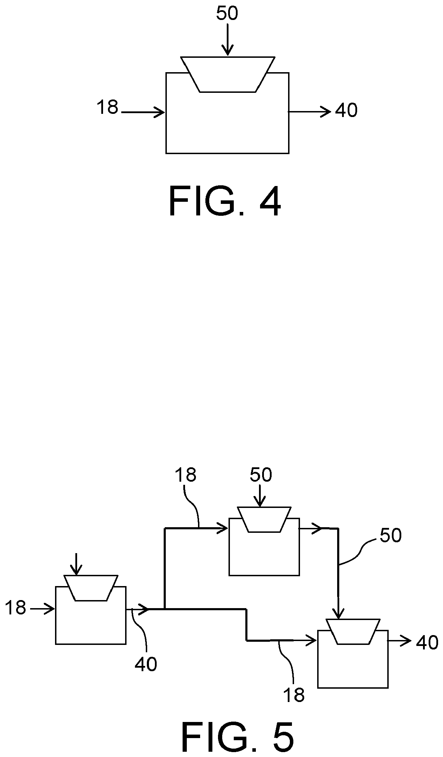

La figure 4 illustre schématiquement un modèle de fonctions de transfert avec une valeur d'entrée 18, une valeur de sortie 40, et un coefficient pondérateur 50. Notons que l'entrée 18, le coefficient pondérateur 50 et la sortie 40 ne sont plus liées à l'équipement physique dont ils sont la source où la cible, mais simplement à une règle de calcul mathématique.

La figure 5 illustre schématiquement un scénario complexe construit à partir du modèle de la figure 4. Dans ce scénario, la valeur de sortie 40 peut servir de valeur d'entrée 18 ou de coefficient 50 à une autre fonction de transfert et ainsi de suite jusqu'à l'obtention du résultat escompté. Notons que la règle mathématique associée au modèle de fonction de transfert peut ainsi être de différents types combinés ou non:

- Opération logique telle que : AND, OR, XOR, NOT, etc.,
- Condition (IF...THEN...ELSE...),
- Opération simple (+, -, x, /),
- Equation mathématique linéaires ou non ($y=ax+b$, $y=eX$, etc...).

Il est à noter que le procédé selon l'invention peut être mis en oeuvre en s'appuyant sur des systèmes à logique floue et d'apprentissage sans sortir du cadre de l'invention.

**Revendications**

1. Procédé de contrôle et de commande d'une pluralité d'équipements hétérogènes d'une installation technique, chaque équipement étant apte à recevoir et/ou à délivrer au moins une information (18, 40), procédé **caractérisé en ce qu'**il comporte les étapes suivantes:

    - traduire (20), par une unité centrale qui supervise les opérations et les interactions des différents équipements, chaque information en classe d'objets abstraits (24) indépendants des caractéristiques physiques desdits équipements, la traduction consistant à classer chaque information soit en tant que grandeur physique binaire susceptible de prendre deux états distincts, soit en tant que grandeur physique variable susceptible de prendre plusieurs valeurs distinctes dans un intervalle continu de valeurs, soit en tant que grandeur physique présentant une forme de trames formatées, chaque classe d'objet étant définie en fonction de propriétés intrinsèques préalablement mémorisées dans une base de connaissance d'abstraction,

- associer (26) chaque classe d'objets abstraits à une catégorie de données interprétables automatiquement,

- appliquer (46) à chaque catégorie de données, par ladite unité centrale, au moins un traitement spécifique parmi une pluralité de traitements prédéfinis permettant de superviser de façon centralisée les opérations et les interactions des différents équipements,

- définir des paramètres de comportement de ladite information en fonction des valeurs extrêmes mesurables (EMmin, EMmax) de ladite grandeur physique, de la précision de mesure de ladite grandeur, du Pas associé à chaque changement de valeur de ladite grandeur, de la formule de conversion d'une valeur mesurée de ladite grandeur en une valeur utilisable par une unité de traitement,

- définir des propriétés intrinsèques de la grandeur physique en fonction de sa valeur actuelle $EM_n$ mesurée à un instant n, de sa valeur précédente $EM_{n-1}$ mesurée à un instant n-1; de sa valeur actuelle $EC_n$ convertie à un instant n, de sa valeur précédente $EC_{n-1}$ convertie à un instant n-1, du code temps actuel mesuré $T_n$, et du code temps précédent $T_{n-1}$.

2. Procédé selon la revendication 1 dans lequel la mise en oeuvre des interactions entre les différents équipements, indépendamment des compatibilités entre matériels, est réalisée par définition de fonctions de transfert et d'un diagramme de flux composés d'entrées, de sorties, ainsi que de fonctions logiques prédéfinies.

3. Procédé selon la revendication 1 dans lequel la traduction de chaque information en classe d'objets abstraits est effectuée par un module d'abstraction et de catégorisation intégré à chaque équipement.

4. Procédé selon la revendication 1 dans lequel la traduction de chaque information en classe d'objets abstraits est effectuée par une unité centrale de traitement (4) qui supervise les opérations et les interactions des différents équipements.

5. Procédé selon la revendication 1 dans lequel la catégorisation (26) de chaque classe d'objet (24) consiste à définir les paramètres de comportement de ladite information en fonction du type de la grandeur représentée par ladite information, et à définir les propriétés intrinsèques de ladite grandeur physique.

6. Procédé selon la revendication 1 comportant en outre une étape consistant à interpréter (42) les propriétés intrinsèques et les paramètres de comportement de chaque information à partir d'une base (22) prédéfinie de connaissance et d'interprétation.

7. Dispositif de contrôle et de commande d'une pluralité d'équipements hétérogènes d'une installation technique, chaque équipement étant apte à recevoir et/ou à délivrer au moins une information (18, 40), dispositif **caractérisé en ce qu'**il comporte:

- un module d'abstraction et de catégorisation (2) destiné à définir, pour chaque information (18), une classe d'objets abstraits (24) indépendants de la nature de ladite information et des caractéristiques physiques desdits équipements,

- un module de catégorisation (26) destiné à associer ladite information à une catégorie prédéfinie de manière à obtenir, pour chaque information (18), une classe d'objet catégorisée (30) définissant des données interprétables automatiquement,

- des moyens pour définir des paramètres de comportement de ladite information en fonction des valeurs extrêmes mesurables (EMmin, EMmax) de ladite grandeur physique, de la précision de mesure de ladite grandeur, du Pas associé à chaque changement de valeur de ladite grandeur, de la formule de conversion d'une valeur mesurée de ladite grandeur en une valeur utilisable par une unité de traitement,

- des moyens pour définir des propriétés intrinsèques de la grandeur physique en fonction de sa valeur actuelle $EM_n$ mesurée à un instant n, de sa valeur précédente $EM_{n-1}$ mesurée à un instant n-1; de sa valeur actuelle $EC_n$ convertie à un instant n, de sa valeur précédente $EC_{n-1}$ convertie à un instant n-1, du code temps actuel mesuré $T_n$, et du code temps précédent $T_{n-1}$.

8. Module d'abstraction et de catégorisation (2) agencé dans un dispositif de contrôle et de commande d'une pluralité d'équipements hétérogènes d'une installation technique selon la revendication 7, **caractérisé en ce qu'**il comporte une unité de traduction destinée à définir, pour chaque information, une classe d'objets abstraits (24) indépendants de la nature de ladite information et des caractéristiques physiques desdits équipements.

9. Module de catégorisation agencé dans un dispositif de contrôle et de commande d'une pluralité d'équipements hétérogènes d'une installation technique selon la revendication 7, **caractérisé en ce qu'**il comporte une unité d'interprétation (42) destinée à associer ladite information à une catégorie prédéfinie de manière à obtenir, pour chaque information, une classe d'objet catégorisée définissant des données interprétables automatiquement.

10. Programme d'ordinateur mémorisé sur un support d'enregistrement comportant des instructions pour réaliser, lorsqu'il est exécuté par un ordinateur, les étapes du procédé selon la revendication 1.

**Patentansprüche**

1. Kontroll- und Steuerverfahren einer Vielzahl von heterogenen Geräten einer technischen Anlage, wobei jedes Gerät in der Lage ist, mindestens eine Information (18, 40) zu empfangen und/oder auszugeben, wobei das Verfahren **dadurch gekennzeichnet ist, dass** es die folgenden Schritte umfasst:

- Übersetzen (20) jeder Information durch eine Zentraleinheit, die die Operationen und Interaktionen der verschiedenen Geräte überwacht, in eine Klasse von abstrakten Objekten (24) unabhängig von den physikalischen Eigenschaften der Geräte, wobei die Übersetzung darin besteht, jede Information entweder als eine binäre physikalische Größe, die zwei verschiedene Zustände annehmen kann, oder als eine variable physikalische Größe, die mehrere verschiedene Werte in einem kontinuierlichen Wertebereich annehmen kann, oder als eine physikalische Größe, die eine formatierte Rahmenform aufweist, zu klassifizieren, wobei jede Objektklasse entsprechend den zuvor in einer Abstraktionswissensdatenbank gespeicherten intrinsischen Eigenschaften definiert wird,
- Zuordnen (26) jeder Klasse von abstrakten Objekten zu einer Kategorie von automatisch interpretierbaren Daten,
- Anwenden (46) mindestens einer spezifischen Verarbeitung aus einer Vielzahl von vordefinierten Verarbeitungen durch die Zentraleinheit auf jede Datenkategorie, wodurch es möglich ist, die Operationen und Interaktionen der verschiedenen Geräte zentral zu überwachen,
- Definieren von Verhaltensparametern der Information in Abhängigkeit von den messbaren Extremwerten (EMmin, EMmax) der physikalischen Größe, der Messgenauigkeit der Größe, dem Schritt, der jeder Wertänderung der Größe zugeordnet ist, der Formel zur Umwandlung eines Messwertes der Größe in einen Wert, der von einer Verarbeitungseinheit verwendet werden kann,
- Definieren von intrinsischen Eigenschaften der physikalischen Größe in Abhängigkeit von ihrem zu einem Zeitpunkt n gemessenen aktuellen Wert EMn, ihrem zu einem Zeitpunkt n-1 gemessenen vorherigen Wert EMn-1; ihrem zu einem Zeitpunkt n umgewandelten aktuellen Wert ECn, ihrem zu einem Zeitpunkt n-1 umgewandelten vorherigen Wert Ecn-1, dem gemessenen aktuellen Zeitcode Tn und dem vorherigen Zeitcode Tn-1.

2. Verfahren nach Anspruch 1, wobei die Umsetzung von Interaktionen zwischen verschiedenen Geräten, unabhängig von der Kompatibilität zwischen Vorrichtungen, durch Definition von Übertragungsfunktionen und einem Flussdiagramm durchgeführt wird, bestehend aus Eingängen, Ausgängen sowie vordefinierten Logikfunktionen.

3. Verfahren nach Anspruch 1, wobei die Übersetzung jeder Information in eine Klasse von abstrakten Objekten durch ein in jedes Gerät integriertes Abstraktions- und Kategorisierungsmodul durchgeführt wird.

4. Verfahren nach Anspruch 1, wobei die Übersetzung jeder Information in eine Klasse von abstrakten Objekten durch eine zentrale Verarbeitungseinheit (4) durchgeführt wird, die die Operationen und Interaktionen der verschiedenen Geräte überwacht.

5. Verfahren nach Anspruch 1, wobei die Kategorisierung (26) jeder Objektklasse (24) darin besteht, die Verhaltensparameter der Information in Abhängigkeit von der Art der durch die Information dargestellten Größe zu definieren und die intrinsischen Eigenschaften der physikalischen Größe zu definieren.

6. Verfahren nach Anspruch 1, ferner umfassend einen Schritt des Interpretierens (42) der intrinsischen Eigenschaften und Verhaltensparameter jeder Information aus einer vordefinierten Wissens- und Interpretationsdatenbank (22) .

7. Kontroll- und Steuervorrichtung einer Vielzahl von heterogenen Geräten einer technischen Anlage, wobei jedes Gerät in der Lage ist, mindestens eine Information (18, 40) zu empfangen und/oder auszugeben, wobei die Vorrichtung **dadurch gekennzeichnet ist, dass** sie umfasst:

- ein Abstraktions- und Kategorisierungsmodul (2), das dazu dient, für jede Information (18) eine Klasse von abstrakten Objekten (24) unabhängig von der Art der Information und den physikalischen Eigenschaften der Geräte zu definieren,
- ein Kategorisierungsmodul (26), das dazu dient, die Information einer vordefinierten Kategorie so zuzuordnen, dass für jede Information (18) eine kategorisierte Objektklasse (30) erhalten wird, die automatisch interpretierbare Daten definiert,
- Mittel zum Definieren von Verhaltensparametern der Information in Abhängigkeit von den messbaren Extremwerten (EMmin, EMmax) der physikalischen Größe, der Messgenauigkeit der Größe, dem Schritt, der jeder Wertänderung der Größe zugeordnet ist, der Formel zur Umwandlung eines Messwertes der Größe in einen Wert, der von einer Verarbeitungseinheit verwendet werden kann,

- Mittel zum Definieren von intrinsischen Eigenschaften der physikalischen Größe in Abhängigkeit von ihrem zu einem Zeitpunkt n gemessenen aktuellen Wert EMn, ihrem zu einem Zeitpunkt n-1 gemessenen vorherigen Wert EMn-1, ihrem zu einem Zeitpunkt n umgewandelten aktuellen Wert ECn, ihrem zu einem Zeitpunkt n-1 umgewandelten vorherigen Wert ECn-1, dem gemessenen aktuellen Zeitcode Tn und dem vorherigen Zeitcode Tn-1.

8. Abstraktions- und Kategorisierungsmodul (2), das in einer Kontroll- und Steuervorrichtung einer Vielzahl von heterogenen Geräten einer technischen Anlage nach Anspruch 7 angeordnet ist, **dadurch gekennzeichnet, dass** es eine Übersetzungseinheit umfasst, die dazu dient, für jede Information eine Klasse von abstrakten Objekten (24) unabhängig von der Art der Information und den physikalischen Eigenschaften der Geräte zu definieren.

9. Kategorisierungsmodul, das in einer Kontroll- und Steuervorrichtung einer Vielzahl von heterogenen Geräten einer technischen Anlage nach Anspruch 7 angeordnet ist, **dadurch gekennzeichnet, dass** es eine Interpretationseinheit (42) umfasst, die dazu dient, die Information einer vordefinierten Kategorie so zuzuordnen, dass für jede Information eine kategorisierte Objektklasse erhalten wird, die automatisch interpretierbare Daten definiert.

10. Computerprogramm, das auf einem Aufzeichnungsmedium gespeichert ist, umfassend Anweisungen zum Ausführen der Schritte des Verfahrens nach Anspruch 1, wenn es von einem Computer ausgeführt wird.

**Claims**

1. A method for monitoring and controlling a plurality of heterogeneous devices of a technical facility, each device being able to receive and/or deliver at least one piece of information (18, 40), the method being **characterized in that** it includes the following steps:

- translating (20), via a central unit that supervises the operations and interactions of the various devices, each piece of information into a class of independent abstract objects (24) independent of the physical characteristics of said devices, the translation consisting of classifying each piece of information either as a binary physical property capable of assuming two distinct states, or as a variable physical property capable of assuming several distinct values in a continuous value interval, or as a physical property assuming a formatted frame form, each object class being defined as a function of inherent properties stored beforehand in an abstraction knowledge base,

- associating (26) each abstract object class with a data category able to be interpreted automatically,

- applying (46), to each data category, by said central unit, at least one specific processing operation from among a plurality of predefined processing operations allowing centralized supervision of the operations and interactions of the various devices,

- defining behavior parameters of said information as a function of measurable extreme values (EMmin, EMmax) of said physical property, the measuring precision of said property, the Pitch associated with each value change of said property, the conversion formula of a measured value of said property into a value usable by a processing unit,

- defining inherent properties of the physical property as a function of its current value EMn measured at a moment n, its previous value EMn-1 measured at a moment n-1; its current value ECn converted at a moment n, its previous value ECn-1 converted at a moment n-1, the measured current time code Tn, and the previous time code Tn-1.

2. The method according to claim 1, wherein the implementation of the interactions between the various devices, independently of the compatibilities between equipment, is done by defining transfer functions and a flow diagram made up of inputs, outputs, as well as predefined logic functions.

3. The method according to claim 1, wherein the translation of each piece of information into abstract object classes is done by an abstraction and categorization module integrated into each device.

4. The method according to claim 1, wherein the translation of each piece of information into abstract object classes is done by a central processing unit (4) that supervises the operations and interactions of the various pieces of equipment.

5. The method according to claim 1, wherein the categorization (26) of each object class (24) consists of defining the behavior parameters of said piece of information as a function of the type of the property represented by said information, and defining the inherent properties of said physical property.

6. The method according to claim 1, further comprising a step consisting of interpreting (42) the inherent properties and the behavior parameters of each piece of information from a predefined knowledge and interpretation base (22).

7. An apparatus for monitoring and controlling a plurality of heterogeneous devices of a technical facility, each device being able to receive and/or deliver at least one piece of information (18, 40), the apparatus being **characterized in that** it comprises:

   - an abstraction and categorization module (2) intended to define, for each piece of information (18), a class of abstract objects (24) that are independent of the nature of said piece of information and physical characteristics of said devices,
   - a categorization module (26) intended to associate said piece of information with a predefined category so as to obtain, for each piece of information (18), a categorized object class (30) defining data capable of being interpreted automatically,
   - means for defining behavior parameters of said piece of information based on measurable extreme values (EMmin, EMmax) of said physical property, the measuring precision of said property, the Pitch associated with each value change of said property, the conversion formula of a measured value of said property into a value usable by a processing unit,
   - means for defining inherent properties of the physical property as a function of its current value EMn measured at a moment n, its previous value EMn-1 measured at a moment n-1; its current value ECn converted at a moment n, its previous value ECn-1 converted at a moment n-1, the measured current time code Tn, and the previous time code Tn-1.

8. An abstraction and categorization module (2) arranged in an apparatus for monitoring and controlling a plurality of heterogeneous devices of a technical facility according to claim 7, **characterized in that** it comprises a translation unit intended to define, for each piece of information, a class of abstract objects (24) that are independent of the nature of said piece of information and the physical characteristics of said devices.

9. A categorization module arranged in an apparatus for monitoring and controlling a plurality of heterogeneous devices of a technical facility according to claim 7, **characterized in that** it comprises an interpretation unit (42) intended to associate said piece of information with a predefined category so as to obtain, for each piece of information, a categorized object class defining data capable of being interpreted automatically.

10. A computer program stored on a recording medium comprising instructions for carrying out, when it is executed by a computer, the steps of the method according to claim 1.

Entrées/Sorties
Equipements
Non communicants

Classes

2

6

2

6

6

6

UNITE CENTRALE

Abstract

Categ°

Traitements

Entrées/Sorties
Equipements
Non communicants

Classes

Entrées/Sorties
Equipements
Non communicants

Classes

Classes

2

10

8

10

4

2

6

10

Classes

2

Entrées/Sorties
Equipements
Non communicants

FIG. 1

EP 2 924 524 B1

FIG. 2

FIG. 3

EP 2 924 524 B1

FIG. 4

FIG. 5

**EP 2 924 524 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009140995 A
- EP 1193578 A1
- EP 1046972578 A1